# FASCICULE DE BREVET EUROPEEN

(11) **EP 0 907 903 B1**
(45) Date de publication et mention de la délivrance du brevet: **24.10.2001**
(21) Numéro de dépôt: 97930611.5
(22) Date de dépôt: 27.06.1997
(51) Int. Cl.: G03B 17/26

(54) **CAMERA POUR FILM CINEMATOGRAPHIQUE ET DISPOSITIF DE RECEPTION DE BOBINES DE FILM**
KINEMATOGRAPHISCHE KAMERA UND AUFNAHMEVORRICHTUNG FÜR FILMSPULEN
MOVING PICTURE CAMERA AND DEVICE FOR RECEIVING FILM REELS

(30) Priorité: 28.06.1996 FR 9608299
(43) Date de publication de la demande: 14.04.1999
(73) Titulaire: Aaton, 38000 Grenoble (FR)
(72) Inventeur: BEAUVIALA, Jean-Pierre, F-38000 Grenoble (FR); RIVIERE, Yves, F-38170 Seyssinet Pariset (FR)
(74) Mandataire: de Beaumont, Michel
(86) Numéro de dépôt international: FR9701159
(87) Numéro de publication internationale: WO9800753

(56) Documents cités:
- DE-A- 2 519 082
- FR-A- 2 389 914
- FR-A- 2 614 704
- GB-A- 1 174 495
- US-A- 4 254 919

## Description

La présente invention concerne les caméras pour films cinématographiques. Elle s'applique plus particulièrement à la réalisation d'un dispositif, de réception de bobines coaxiales de film cinématographique, destiné à être associé à un bloc optique d'une caméra et contenant un mécanisme d'entraînement et de guidage du film, en boucle, entre les bobines et un presseur arrière destiné à être en regard d'une fenêtre de prise de vues du bloc optique. La présente invention concerne plus particulièrement les films cinématographiques, par exemple, de 16 ou 35 mm.

Pour de tels films, la caméra de prise de vues est classiquement associée à un magasin contenant un mécanisme d'entraînement du film et définissant des compartiments de réception de bobines de film. La pellicule vierge est dévidée depuis une bobine débitrice engagée sur un axe d'un compartiment débiteur vers une optique de prise de vues en étant guidée par des galets du magasin. Le film exposé est enroulé sur une bobine réceptrice engagée sur un axe motorisé d'un compartiment récepteur du magasin. En raison du métrage important de pellicule qui est généralement utilisé dans ce type de caméra, les bobines débitrice et réceptrice sont généralement coaxiales en étant enroulées sur des noyaux qui coopèrent avec des axes coaxiaux, respectivement débiteur et récepteur, liés au magasin.

Un inconvénient des magasins classiques est que le chargement d'une bobine vierge dans le magasin et le déchargement d'une bobine exposée imposent une obscurité totale. En effet, le chargement d'une bobine vierge s'effectue à plat en engageant un premier noyau, sur lequel la pellicule a été enroulée lors de sa fabrication, sur l'axe débiteur du magasin. L'amorce de la pellicule est alors engagée dans les galets du magasin pour être guidée vers un presseur arrière associé à une fenêtre de prise de vues du bloc optique. L'amorce est ensuite ramenée, depuis le presseur arrière, vers un deuxième noyau vierge, engagé sur l'axe récepteur du magasin et sur lequel est attachée l'amorce. Même si le magasin peut être fermé dès que la bobine vierge a été placée sur l'axe débiteur et que l'amorce est engagée dans une fente prévue à cet effet, le compartiment débiteur étant isolé du reste du magasin, le simple fait de devoir placer une bobine non protégée dans le compartiment débiteur, entraîne un risque de voiler la pellicule vierge. Le déchargement d'un film exposé s'effectue en ouvrant le compartiment récepteur et en extrayant le noyau sur lequel la bobine de film exposé est enroulée. Le déchargement s'effectue donc, comme le chargement, à plat et sans que le film exposé soit protégé de la lumière.

Pour permettre un chargement ou un déchargement du magasin hors lumière du jour, le bloc optique de la caméra, qui comporte les moyens de motorisation du mécanisme d'entraînement, est généralement dissocié du magasin comportant le mécanisme d'entraînement proprement dit. En effet, les films de 35 mm, voire de 16 mm, sont souvent utilisés pour des tournages de longs métrages qui nécessitent l'emploi de plusieurs bobines de pellicule. Or, de tels tournages ne sont pas nécessairement effectués en studio et se trouvent donc, souvent, loin d'une chambre noire permettant le chargement ou déchargement du magasin en toute sécurité. Ainsi, on est généralement conduit à disposer de plusieurs magasins qui sont chargés à l'avance pour effectuer un tournage dans des conditions de sécurité acceptables du point de vue des bobines de film. Cependant, le mécanisme d'entraînement d'un magasin est un système particulièrement onéreux en raison de l'absence de bruit acoustique qu'il doit entraîner et de la précision avec laquelle il doit être réalisé. Prévoir plusieurs magasins est donc coûteux.

Un autre inconvénient des magasins classiques est que le contact du film avec les parois des compartiments débiteur et récepteur constitue une source de bruit acoustique liée à un frottement du film lors de la rotation des noyaux. En effet, il est important de veiller à ce que les spires du film restent bien superposées les unes aux autres. Les compartiments sont donc dimensionnés en conséquence. On est alors généralement conduit à prévoir des moyens d'amortissement acoustique dans les faces des compartiments débiteur et récepteur, ce qui en augmente encore la complexité et le coût.

Le brevet américain US-A-3 475 089 décrit une caméra pour film cinématographique de 8 mm. Dans un mode de réalisation, deux bobines de film sont reçues de façon coaxiale dans un magasin. Chaque bobine comporte deux joues circulaires de maintien axial du film autour du noyau. Si l'emploi de telles joues circulaires permet de maintenir un jeu axial entre les parois du magasin et les bobines pour supprimer la source de bruit liée au frottement du film sur ces parois, on introduit une nouvelle source de bruit acoustique liée au frottement du film lorsqu'il sort d'une bobine et entre dans l'autre par leurs périphéries respectives. En outre, ce bruit est d'autant plus important que la vitesse de défilement du film est élevée, ce qui rend cette solution inapplicable à des films de 16 mm, et encore moins applicable à des films de 35 mm. Dans un autre mode de réalisation, le film est logé dans une cassette de réception de deux bobines coaxiales. Les mêmes problèmes de frottement du film que ceux exposés ci-dessus en relation avec les parois d'un magasin se posent avec les parois d'une cassette. De plus, si l'emploi d'une cassette protège le film d'une exposition à la lumière lors des étapes de chargement ou de déchargement du magasin, on introduit encore une nouvelle source de bruit acoustique. En effet, le film est obligatoirement en contact avec des éléments liés, de manière fixe ou en rotation, à des parois de la cassette, ce qui constitue une source de bruit en raison des tolérances de fabrication liées à l'obtention d'une cassette à usage unique. En outre, si le presseur arrière est contenu dans la cassette, on ne peut garantir un positionnement optimal devant la fenêtre de prise de vues du bloc optique.

Certaines caméras sont pourvues de moyens d'identification du magasin pour permettre à l'utilisateur de connaître les caractéristiques du film qu'il contient. Lors du chargement d'une bobine de pellicule vierge dans un magasin, l'utilisateur paramètre un dispositif de caractérisation que comporte le magasin, par exemple, au moyen d'interrupteurs. La caméra comporte alors des moyens propres à extraire les informations contenues dans ce dispositif de caractérisation lorsque le magasin lui est associé. Les informations qui peuvent être introduites sont, par exemple, le numéro du magasin, la sensibilité du film, la longueur de la pellicule, etc. La caméra peut mémoriser les informations relatives à plusieurs magasins. Au fur et à mesure du tournage, la caméra décrémente l'information relative à la longueur du film de façon à connaître, en permanence, la longueur restante de pellicule vierge. Lorsque l'utilisateur change de magasin, par exemple pour disposer d'un film de sensibilité différente, la caméra extrait de sa mémoire toutes les informations relatives à ce magasin qu'elle reconnaît par son numéro, s'il a déjà été utilisé précédemment. Ainsi, l'utilisateur sait, en introduisant ce magasin déjà utilisé dans la caméra, quelle longueur de film reste disponible.

La présente invention vise à proposer un dispositif de réception de bobines de film coaxiales, respectivement de pellicule vierge et de film exposé, qui supprime toute génération de bruit acoustique tout en permettant un maintien axial du film autour des noyaux respectifs des bobines.

La présente invention vise également à proposer un dispositif de réception d'une cassette, destinée à contenir deux bobines de film coaxiales et dissociée du mécanisme d'entraînement et de guidage de la pellicule, qui assure un positionnement optimal du film devant un presseur arrière d'une caméra de prise de vues à laquelle il est associé.

La présente invention vise également à proposer un tel dispositif de réception qui permette que le film, en position d'utilisation, ne soit pas en contact avec des parois de la cassette ni avec des éléments liés, de manière fixe ou en rotation, à des parois de la cassette.

L'invention vise également à empêcher toute sortie radiale du film de chaque bobine autrement que dans une région déterminée du magasin ou de la cassette.

L'invention vise également à ce que le film puisse être enroulé, ou déroulé, depuis cette région déterminée, uniquement lorsque la bobine est en position d'utilisation.

La présente invention vise également à proposer un tel dispositif de réception qui puisse être associé à un bloc optique classique d'une caméra de prise de vues.

La présente invention vise également à ce que le dispositif de réception constitue un adaptateur entre une même cassette et différents types de blocs optiques de caméras classiques.

La présente invention vise en outre à permettre une identification automatique, par la caméra, de caractéristiques du film contenu dans la cassette.

Pour atteindre ces objets, la présente invention prévoit le dispositif de réception de bobines de film cinématographique défini à la revendication 1.

Selon un mode de réalisation de la présente invention, chaque axe secondaire porte à rotation un rouleau de renvoi, encadré axialement par deux disques constituant les moyens d'écartement, également montés à rotation sur l'axe secondaire indépendamment du rouleau de renvoi.

Selon un mode de réalisation de la présente invention, le diamètre des disques est supérieur au diamètre du rouleau auquel ils sont associés.

Selon un mode de réalisation de la présente invention, chaque joue comporte, en périphérie, un bord biseauté propre à constituer une surface d'appui pour un disque d'un axe secondaire, les bords biseautés des deux joues d'une même bobine se faisant face.

Selon un mode de réalisation de la présente invention, au moins un disque d'une bobine est motorisé.

Selon un mode de réalisation de la présente invention, au moins un rouleau de renvoi est motorisé et comporte des moyens de traction du film.

Selon un mode de réalisation de la présente invention, l'axe principal est motorisé, les rouleaux de renvoi et les disques étant libres en rotation indépendamment les uns des autres sur les axes secondaires.

Selon un mode de réalisation de la présente invention, lesdites bobines sont contenues dans une cassette pourvue de rideaux mobiles entre une position fermée où ils définissent des fentes de communication entre l'extérieur et l'intérieur de la cassette et une position ouverte où ils définissent des ouvertures d'introduction au moins partielle des disques d'écartement des joues.

Selon un mode de réalisation de la présente invention, le dispositif de réception comporte des moyens d'actionnement, accessibles depuis l'extérieur, pour commander l'ouverture simultanée et la fermeture simultanée des rideaux de la cassette.

Selon un mode de réalisation de la présente invention, les moyens d'actionnement verrouillent simultanément un couvercle de fermeture de l'espace destiné aux moyens de guidage.

Selon un mode de réalisation de la présente invention, le dispositif de réception comporte des moyens, accessibles depuis l'extérieur, de commande de déplacements radiaux des axes secondaires entre les positions de repos et active.

Selon un mode de réalisation de la présente invention, le dispositif de réception comporte des moyens, accessibles depuis l'extérieur, de commande de déplacement radial de l'axe principal entre les positions de repos et active.

Selon un mode de réalisation de la présente invention, le dispositif de réception est amovible par rapport au bloc optique, les moyens de guidage étant constitués de galets supportés, au moins pour certains d'entre eux, par la platine, la réalisation et le positionnement desdits galets supportés par la platine étant fonction du bloc optique auquel est destiné le dispositif de réception tandis que la position des axes principal et secondaires est fonction de la cassette à laquelle est destiné le dispositif de réception.

Selon un mode de réalisation de la présente invention, le dispositif de réception comporte un dispositif de lecture optique d'une étiquette contenant des caractéristiques du film contenu dans la cassette et apposée sur une face externe de celle-ci, la platine comportant une lumière propre à être en regard de l'étiquette, et une barrette de lecture optique associée au dispositif de réception étant propre à défiler devant cette lumière.

L'invention concerne également la caméra de prise de vues pour film cinématographique définie à la revendication 15, comportant un bloc optique associé à des moyens de motorisation d'un mécanisme d'entraînement du film, des moyens de réception d'une cassette amovible contenant le film sous la forme d'une première bobine de pellicule vierge et d'une deuxième bobine de film exposé, les bobines étant coaxiales et lesdits moyens de réception comportant des moyens propres à coopérer avec des éléments mobiles contenus dans la cassette pour que en position d'utilisation, ni le film, ni un élément mobile avec lequel le film est en contact soit en contact avec un élément fixe de la cassette.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 est une vue en perspective éclatée d'une caméra de prise de vues selon un mode de réalisation de la présente invention ;
la figure 2 représente une vue en perspective d'une bobine de film pourvue de joues de maintien axial selon la présente invention ;
la figure 3 est une vue en coupe axiale d'une bobine de film telle que représentée à la figure 2, associée à un moyen d'écartement d'un dispositif de réception selon l'invention ;
les figures 4A et 4B représentent un détail d'une cassette et d'un moyen de renvoi du film et d'écartement des joues des bobines, respectivement, dans une position de repos et dans une position active ;
la figure 5 représente une vue en perspective de moyens d'actionnement de rideaux d'une cassette et de verrouillage d'un couvercle du dispositif de réception selon l'invention ;
la figure 6 représente, en coupe axiale, un détail d'une cassette positionnée sur un dispositif de réception selon la présente invention ;
la figure 7 est une vue en élévation d'un premier mode de réalisation d'un dispositif, selon l'invention, de réception d'une cassette pour film cinématographique ;
la figure 8 est une vue en élévation d'un second mode de réalisation d'un dispositif de réception selon l'invention ;
la figure 9 représente un mode de réalisation de moyens d'identification du film contenu dans une cassette ; et
la figure 10 est une vue en coupe, d'un détail de la figure 9.

. Pour des raisons de clarté, seuls les éléments nécessaires à la compréhension de l'invention ont été représentés aux figures. Pour les mêmes raisons, les mêmes éléments ont été désignés par les mêmes références aux différentes figures et les figures ne sont pas à l'échelle.

Une caractéristique de la présente invention est de prévoir, au sein du dispositif de réception, des moyens d'écartement de la périphérie de joues circulaires de maintien axial de bobines de film dans une région déterminée, fixe par rapport au dispositif de réception. Selon un premier aspect de l'invention, on prévoit des moyens permettant un mouvement relatif entre les moyens d'écartement et les bobines, entre une position de repos où ces moyens d'écartement sont distants des joues de maintien des bobines de film, et une position active où ils écartent la périphérie des joues.

Une caractéristique d'un deuxième aspect de la présente invention est de dissocier les fonctions d'un magasin classique d'une caméra de prise de vues. Selon l'invention, la fonction de magasin proprement dite est reportée dans une cassette tandis que les fonctions de guidage et d'entraînement du film, vers une fenêtre de prise de vues du bloc optique de la caméra, sont reportées dans un dispositif de réception de la cassette.

Une autre caractéristique de la présente invention est que tous les éléments destinés à assurer un guidage du film lors des prises de vues sont contenus dans le dispositif de réception.

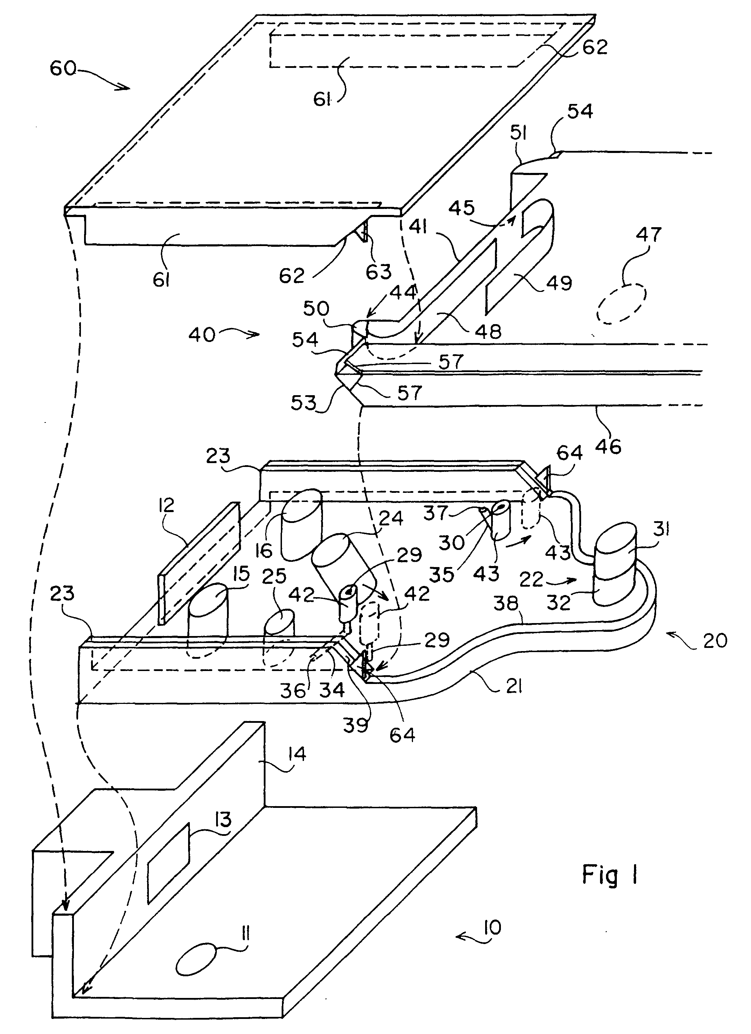

La figure 1 représente, schématiquement et en perspective éclatée, une caméra selon un mode de réalisation de la présente invention. Dans l'exemple représenté, il s'agit d'une caméra à cassette, c'est-à-dire que le dispositif de réception est destiné à recevoir une cassette de film et non des bobines libres. On notera cependant que la plupart des caractéristiques de l'invention qui seront décrites ci-après s'appliquent également au cas où le dispositif de réception est destiné à recevoir deux bobines de film libres.

Le bloc optique 10 est un bloc optique classique d'une caméra de prise de vues. On se bornera à rappeler qu'il est pourvu de moyens de motorisation 11 d'un mécanisme d'entraînement qui est associé au dispositif de réception 20. Le couplage entre les moyens de motorisation 11 et le mécanisme d'entraînement est, par exemple et de manière classique, un couplage magnétique ou par engrenage.

Le dispositif de réception 20 est, selon l'invention, destiné à recevoir tous les constituants d'un magasin classique qui sont destinés à guider le film vers un presseur arrière 12 pour présenter une portion du film devant une fenêtre 13 de prise de vues du bloc 10. Le dispositif 20 est constitué d'une platine 21 dans l'épaisseur de laquelle sont intégrés, de manière classique, des moyens d'entraînement (non représentés), par exemple, d'un axe principal 22. Les moyens d'entraînement sont couplés, par exemple magnétiquement, avec les moyens de motorisation 11. Deux parois latérales 23 définissent, avec une paroi arrière 14 du bloc 10 et une paroi frontale 41 d'une cassette 40, un espace dans lequel sont contenus des moyens de guidage du film, depuis la cassette 40 vers le presseur arrière 12. Dans l'exemple représenté à la figure 1, le presseur arrière 12 et quatre galets de guidage 15, 16, 24 et 25 sont associés au dispositif 20. Les galets 15 et 16 sont généralement entraînés en rotation par le mécanisme d'entraînement (non représenté).

La platine 21 est fixée au bloc optique 10 de la même manière qu'un magasin classique et comporte, à cet effet, des moyens similaires (non représentés).

Selon l'invention, le dispositif 20 comporte également deux rouleaux de renvoi, respectivement 42 et 43, montés sur des axes secondaires, respectivement 29 et 30. Selon le mode de réalisation représenté, ces axes 29 et 30 sont montés individuellement à une première extrémité d'une biellette, respectivement 34 et 35, dont l'autre extrémité est reliée à un axe de pivotement, respectivement 36 et 37. Les axes 36 et 37 sont parallèles aux axes 29 et 30 de sorte qu'une rotation des axes 36 et 37 provoque un déplacement des rouleaux 42 et 43 entre deux positions de repos et active représentées, respectivement, en traits pleins et en pointillés à la figure 1. On notera cependant que d'autres moyens de déplacement, par exemple en translation, des axes secondaires peuvent être prévus.

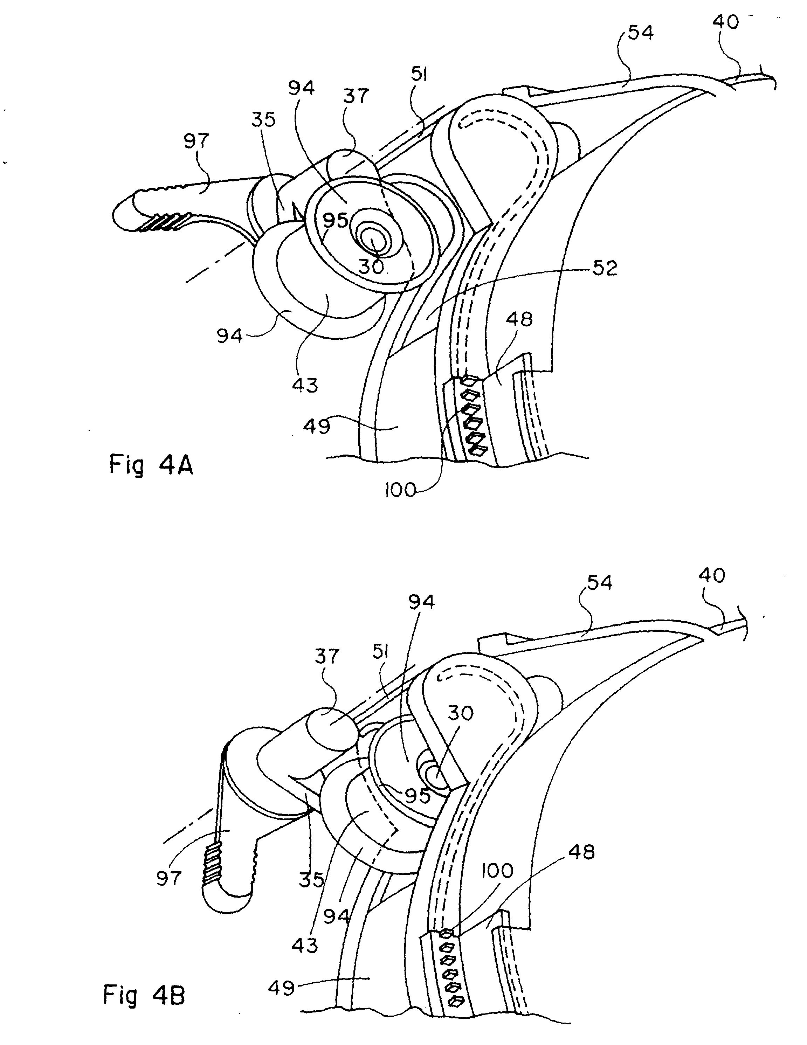

Selon l'invention, les axes secondaires 29 et 30 portent également des moyens d'écartement de joues circulaires (non représentées à la figure 1) de maintien axial du film en forme de bobine. Ainsi, dans le mode de réalisation représenté à la figure 1, les moyens d'écartement sont mobiles entre une position de repos, où ils ne gênent pas l'introduction de la cassette sur le dispositif de réception (ou des bobines libres dans le magasin constitué par le dispositif de réception) et une position active où ils coopèrent avec la périphérie des joues des bobines dans une région déterminée, fixe par rapport au dispositif de réception. Cette caractéristique de la présente invention sera mieux comprise en relation avec les figures 4A et 4B qui seront décrites ultérieurement.

Une caractéristique de la présente invention est que les rouleaux 42 et 43 sont indépendants en rotation par rapport aux moyens d'écartement qui sont également portés par les axes 29 et 30. A titre de variante non représentée, les axes 29 et 30 sont fixes et l'axe 22 est mobile entre les positions de repos et active. Dans ce cas, le déplacement de l'axe 22 entraîne le déplacement des bobines (et, le cas échéant, de la cassette) qu'il porte par rapport aux moyens d'écartement. Le déplacement imprimé à l'axe 22 est ici, de préférence, une translation selon la médiane passant par l'axe 22 du triangle défini par les axes 22, 29 et 30.

La cassette 40 définit deux logements de tailles identiques pour des bobines de film (non représentées). Un premier logement, distal du fond 46, est destiné à recevoir une bobine de pellicule vierge enroulée sur un premier noyau (non représenté). Un second logement, proximal du fond 46, est destiné à recevoir, par enroulement sur un second noyau, coaxial au premier noyau, une bobine de film exposé. Une amorce de la pellicule vierge est fixée, par exemple par collage, au second noyau après formation d'une boucle sortant de la cassette 40 par une fente 44 et y entrant par une fente 45. Le film est donc destiné à être monté en boucle dans le trajet défini par les galets 15, 16, 24 et 25 et le presseur arrière 12. Chaque rouleau 42 ou 43 est associé à une des deux bobines pour renvoyer le film depuis cette bobine vers le galet, respectivement 24 ou 16. Bien qu'à la figure 1, la cassette 40 ait été représentée de forme générale rectangulaire, elle peut avoir toute autre forme, par exemple circulaire. De plus, les bobines peuvent être inversées, c'est-à-dire que la bobine débitrice de film vierge peut être proximale du fond 46, le noyau récepteur étant distal du fond 46.

Selon le mode de réalisation décrit de la cassette 40, celle-ci comporte, dans sa partie frontale 41, deux rideaux 48 et 49 mobiles entre une position fermée (telle que représentée à la figure 1) où ils définissent les fentes 44 et 45 avec des parois arrondies, respectivement 50 et 51, de la cassette, et une position ouverte où ils libèrent des ouvertures 52 (figures 4A et 4B) d'accès pour les moyens d'écartement et les rouleaux 42 et 43. Cette caractéristique sera mieux comprise en relation avec les figures 4A et 4B.

Le fond 46 de la cassette 40 est pourvu d'un orifice 47 permettant l'engagement de l'axe 22. L'axe 22 a une constitution similaire à celle d'un axe central d'un magasin classique. Par exemple, une première portion 31 de l'axe 22, destinée à coopérer avec le premier noyau portant la bobine de pellicule vierge, est libre en rotation, voire légèrement freinée. Une seconde portion 32 de l'axe 22, destinée à coopérer avec le second noyau portant la bobine de film exposé, est motorisée pour tracter le film.

Comme les deux bobines sont dans des plans différents, l'axe 29 associé au rouleau 42 est plus long que l'axe 30 associé au rouleau 43.

Les bobines de la cassette 40 qui sont destinées à être en mouvement lors de l'entraînement du film sont logées avec jeu axial et radial dans la cassette 40. De plus, elles ne sont en contact avec aucun élément fixe de la cassette lorsque le film est en mouvement, c'est-à-dire lorsque les axes 29 et 30 sont en position active, les rideaux 48 et 49 étant ouverts. Ainsi, lorsqu'il est en mouvement, le film n'est en contact avec aucun élément, fixe ou en rotation, lié aux parois de la cassette.

Lorsque la cassette 40 est en position d'utilisation dans le dispositif de réception 20, les axes 22, 29 et 30 assurent un positionnement axial et radial des bobines et du film par rapport aux galets 15, 16, 24 et 25. La référence de positionnement est donc donnée, selon l'invention, par le dispositif 20. L'ensemble dispositif 20 et cassette 40 peut alors être utilisé comme un magasin classique.

La platine 21 comporte, en outre, des moyens 38 d'étanchéité au passage de la lumière entre le dispositif 20 et la cassette 40. En effet, lorsque la cassette 40 est en position d'utilisation, la portion du film qui circule entre les galets 15, 16, 24 et 25 ne doit pas être exposée à la lumière autrement que par la fenêtre 13 de prise de vues du bloc optique 10. On prévoit donc, selon l'invention, une liaison de la cassette 40 au dispositif 20 qui soit étanche au passage de la lumière. Les moyens d'étanchéité sont, par exemple, constitués d'un joint 38 destiné à être écrasé par une nervure (non représentée) dont est pourvu le fond 46. Le trajet du joint est fonction de la forme de la cassette 40 à laquelle est destiné le dispositif 20 selon l'invention. Ici, le trajet du joint est extérieur aux axes 22, 29 et 30 pour que la zone étanche qu'il définit englobe l'orifice 47 et les ouvertures frontales 52 (figure 4A) de la cassette 40.

Un capot 60 du dispositif de réception 20 vient fermer l'espace contenant les galets 15, 16, 24 et 25 et le presseur arrière 12 pour protéger la boucle de film de la lumière. Selon l'invention, le capot 60 recouvre, au moins partiellement, la cassette 40 pour parfaire l'étanchéité à la lumière. Le capot 60 comporte, de préférence et comme la platine 21, dans sa face dirigée vers la cassette 40, des moyens d'étanchéité propres à coopérer avec des moyens correspondants (non représentés) de l'extérieur de la cassette 40.

Selon un mode de réalisation préféré, le joint 38 se prolonge sur les parois 23 du dispositif 20 pour coopérer avec des moyens correspondants ménagés sur l'extrémité libre de parois latérales 61 et 62 du capot 60. De préférence, le changement de plan effectué par le joint 38 entre les parois 23 et la platine 21 s'effectue en biais, ce qui facilite le montage du joint et garantit une meilleure étanchéité à ses pliures. Ainsi, les parois 23 et 61 se terminent, côté cassette, par des plans inclinés, respectivement 39 et 62. Ces plans sont destinés à coopérer avec des bords frontaux, respectivement 53 et 54, de la cassette 40 qui présentent une forme contraire. La nervure d'étanchéité est, de préférence, continue d'une face à l'autre de la cassette en reliant les deux faces par l'intermédiaire des bords 53 et 54.

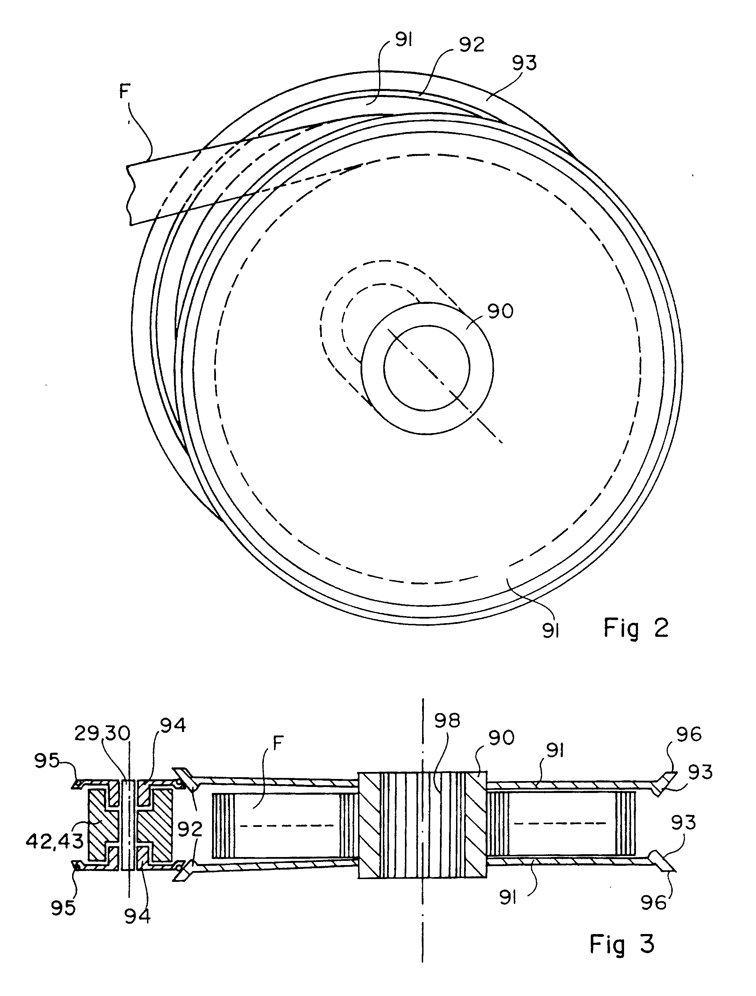

Les figures 2 et 3 représentent un mode de réalisation de joues circulaires de maintien du film en forme de bobine selon l'invention. La figure 2 est une vue en perspective d'une bobine de film. La figure 3 est une vue en coupe axiale de la bobine représentée à la figure 2 en position d'utilisation, illustrant un mode de réalisation d'un rouleau de renvoi et de moyens d'écartement portés par l'axe 29 ou 30.

Comme il ressort de ces figures, l'invention prévoit d'associer à un noyau 90 destiné à recevoir, par enroulement, un film cinématographique F, deux joues 91 de maintien axial. Ces deux joues 91 sont, par exemple, constituées de deux disques élastiquement déformables en matière plastique qui sont liés aux deux extrémités longitudinales du noyau 90.

Outre le fait qu'elles maintiennent axialement le film F sur le noyau 90, les joues 91 protègent le film de la poussière et, si elles sont en un matériau opaque, de la lumière.

Chaque joue 91 comporte, au voisinage de sa périphérie interne, un redent périphérique 92 de maintien radial. Les redents 92 servent à maintenir le film F à l'intérieur des joues 91 en l'empêchant de sortir par la périphérie de la bobine.

De préférence, les joues 91 sont, en périphérie et au repos, légèrement incurvées vers l'intérieur de la bobine. Le choix d'une forme légèrement incurvée vers l'intérieur de la périphérie des joues 91 permet de garantir l'effet recherché dans une fabrication en série par injection de matière plastique. En effet, les joues 91 sont d'un diamètre très important par rapport à leur épaisseur et par rapport au diamètre du noyau auquel elles sont fixées. Le diamètre des joues 91 (jusqu'à plusieurs dizaines de centimètres) est fixé par la longueur maximale de film à enrouler. L'épaisseur des joues est choisie relativement fine (de l'ordre du millimètre) pour qu'elles puissent se déformer élastiquement. Une fabrication de joues planes risquerait de conduire à des joues dont la périphérie serait incurvée vers l'extérieur. Le film ne serait alors plus maintenu radialement et risquerait de se dévider accidentellement pendant le stockage de la bobine.

En périphérie, chaque joue 91 présente un bord 93 biseauté en direction de l'autre joue de la bobine. Les biseaux 93 sont destinés à coopérer avec des disques d'écartement 94 portés par l'axe 29 ou 30. Chaque axe 29 ou 30 reçoit, outre le rouleau 42 ou 43, deux disques d'écartement 94 coaxiaux et encadrant axialement le rouleau 42 ou 43. Les disques 94 sont destinés à écarter la périphérie des joues 91 en appuyant contre les bords biseautés 93 lorsque les biellettes 34 et 35 ont pivoté vers la position d'utilisation. Par exemple, les périphéries des disques 94 portent un joint annulaire 95 améliorant la liaison en rotation des disques 94 avec les joues 91. Le bord 93 de chaque joue 91 présente une hauteur axiale suffisante pour constituer une surface d'appui pour le bord du disque 94 depuis la position où il entre en contact avec le bord 93 jusqu'à la position active où les joues sont écartées l'une de l'autre. De plus, l'inclinaison de la surface d'appui créée par les bords biseautés 93 garantit un contact ponctuel avec la périphérie des disques 94 afin d'éviter tout frottement.

L'extrémité externe de chaque bord 93 définit un débord externe 96 par rapport au plan de la joue 91. Le débord 96 peut coopérer, avec jeu radial et axial, avec une nervure concentrique (non représentée) ménagée dans la face interne du fond 46 de la cassette 40, pour constituer un piège à la lumière qui est susceptible d'entrer par l'orifice 47 lorsque la cassette 40 est en position de stockage hors du dispositif de réception 20.

Comme les joues 91 sont liées au noyau 90, elles sont entraînées en rotation en même temps que celui-ci. Ainsi, lorsque les écarteurs 94 sont en position active, le film peut être dévidé, ou enroulé, en sortant ou en pénétrant entre les joues 91 dans la région du rouleau 42 ou 43. On impose ainsi au film une seule région de sortie ou d'entrée dans la bobine.

Par l'élasticité des joues 91, celles-ci reprennent leur position de repos où elles empêchent la sortie du film F dans les autres régions périphériques. Ainsi, même lorsque les écarteurs 94 sont en position active, on empêche tout désalignement axial du film F et toute sortie du film ailleurs que dans la région des écarteurs 94.

De préférence, le diamètre des disques 94 est sensiblement supérieur au diamètre des rouleaux 42 et 43. Ainsi, les disques 94 constituent à la fois un moyen d'écartement des joues 91 et un moyen de positionnement axial du film F autour des rouleaux 42 et 43. On garantit alors un positionnement idoine du film renvoyé vers les rouleaux 24 et 16.

Un autre avantage de la présente invention est que l'on évite toute génération de bruit acoustique lors de la sortie du film dans la région déterminée des bobines. En effet, on supprime tout frottement du film avec la périphérie des joues 91 et, comme les joues 91 sont liées en rotation aux disques 94 et que ces derniers sont indépendants en rotation par rapport aux rouleaux 42 ou 43, il n'y a pas de frottement susceptible de générer du bruit acoustique.

Selon le mode de réalisation représenté, l'axe 22 est moteur et les rouleaux 42 et 43 ainsi que les disques 94 sont libres en rotation par rapport aux axes 29 et 30. A titre de variante, les portions 31 et 32 de l'axe 22 sont libres en rotation. Dans ce cas, au moins un disque 94 associé à la bobine réceptrice est moteur. De même et de préférence, au moins un des rouleaux 42 et 43 est alors moteur (à une vitesse différente de celle du disque 94) et comporte des moyens (par exemple, des dents) de traction du film. Le cas échéant, les deux rouleaux 42 et 43 sont moteurs et/ou les disques 94 de la bobine réceptrice sont moteurs tandis que les disques 94 de la bobine réceptrice sont légèrement freinés. Le choix du mode de réalisation dépend, en particulier, du bloc optique 10. Par exemple, des rouleaux moteurs 42 et 43 peuvent jouer le rôle des rouleaux 15 et 16 dans une caméra dont le bloc optique est associé à un dispositif de réception prévu pour que le film passe directement de la cassette à deux rouleaux constituant à la fois des rouleaux de guidage et de renvoi motorisés vers le presseur arrière.

Selon l'invention, le déplacement des rouleaux de renvoi et des moyens d'écartement (ou de l'axe 22) est effectué au moyen d'un organe de commande accessible depuis l'extérieur du dispositif de réception, par exemple, au dos de la platine 21 dans une portion faisant saillie du bloc optique 10 à l'opposé de la fenêtre de prise de vues. Ces moyens d'écartement peuvent également être réalisés pour être accessibles depuis l'extérieur du couvercle 60.

Les figures 4A et 4B représentent un mode de réalisation de cet organe de commande, respectivement, en position de repos et en position active, appliqué à un pivotement des axes 29 et 30. Ces figures représentent, en perspective, un détail de la cassette 40 au voisinage du rouleau 43. Pour des raisons de clarté, le dispositif de réception 20 n'a pas été représenté aux figures 4A et 4B.

L'organe de commande est, par exemple, constitué d'un levier 97 d'actionnement en rotation de l'axe 37 qui traverse la platine 21. Les rideaux 48 et 49 ont été représentés dans leur position ouverte, c'est-à-dire qu'ils ne définissent pas les fentes 44 et 45 avec les parois 50 et 51, mais qu'ils délimitent les ouvertures 52 (une seule ouverture est représentée aux figures 4A et 4B). On suppose donc que le film (non représenté) a déjà été monté en boucle jusqu'au presseur arrière et que le couvercle 60 est en place. En position de repos du levier 97 (figure 4A), les disques 94 sont légèrement à l'écart de l'ouverture 52. En position active (figure 4B), les disques 94 et le rouleau 43 pénètrent au moins partiellement dans la cassette 40 par l'ouverture 52 pour que les disques 94 écartent les joues de la bobine. La profondeur de pénétration des rouleaux de renvoi dans la cassette dépend du jeu radial entre la cassette et les joues 91. Le cas échéant, même l'axe 30 peut pénétrer dans la cassette, pourvu que l'ouverture 52 soit adaptée à la hauteur de l'axe et à l'épaisseur de la biellette 35.

On notera que le trajet du film n'est pas modifié par la mise en position d'utilisation du rouleau 43. En effet, le film est monté en boucle jusqu'au presseur arrière 12 alors que le rideau 49 est fermé et définit, avec la paroi arrondie 51, un moyen de déviation du film depuis la bobine vers le galet 16. En position d'utilisation, le rouleau 43 reprend la fonction de renvoi assurée précédemment par le rideau. Le même fonctionnement est reproduit pour le rouleau 42, le galet 24 et le rideau 48.

Selon l'invention, le dispositif de réception 20 comporte des moyens d'actionnement des rideaux 48 et 49 depuis l'extérieur du dispositif. De préférence, ces moyens commandent simultanément le verrouillage du couvercle 60 en position fermée afin de maintenir la cassette et d'interdire toute ouverture du couvercle, donc toute exposition accidentelle du film tant que les rideaux 48 et 49 sont ouverts.

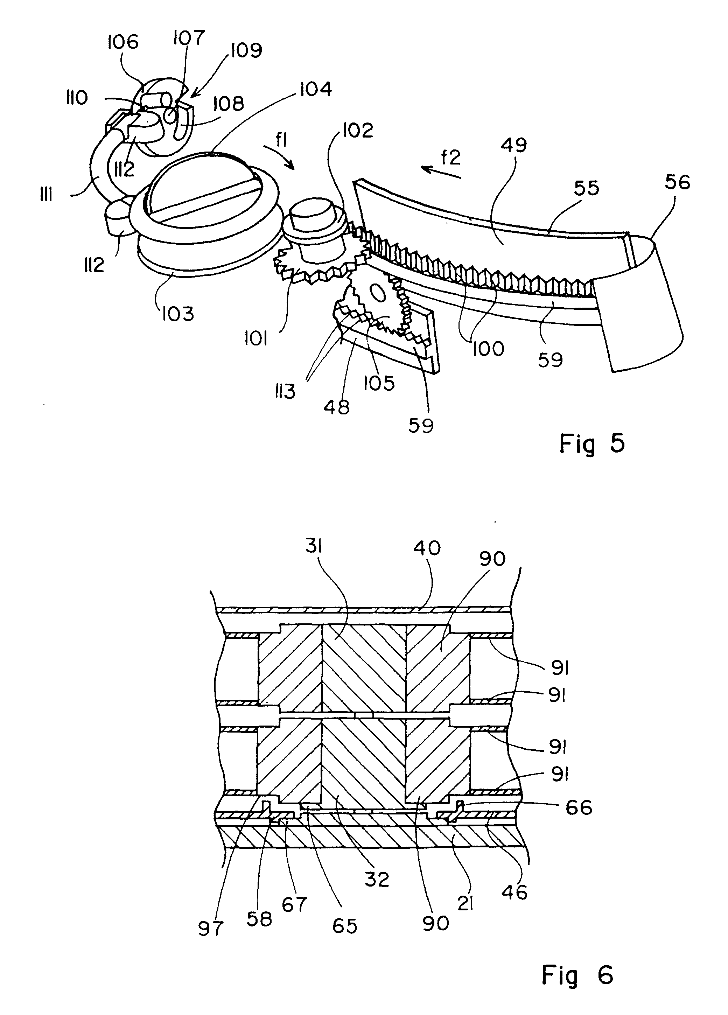

La figure 5 illustre un mode de réalisation d'un moyen d'actionnement des rideaux et de verrouillage du couvercle. Pour des raisons de clarté, cette figure représente uniquement les moyens d'actionnement, dans une vue en perspective illustrant les rideaux 48 et 49 en position fermée. La vue est prise depuis le dos de la platine 21.

Le rideau 49 comporte, dans un rebord externe 59, un train de dents 100 destiné à coopérer avec une roue dentée 101. La roue dentée 101 est liée en rotation de façon coaxiale avec une roue 102 entraînée par un disque 103 actionné manuellement au moyen d'un axe (non représenté) traversant la platine 21 et entraîné par un organe de commande manuelle 104. La liaison en rotation de la roue 102 et du disque 103 s'effectue, par exemple, également au moyen de dents (non représentées). En imprimant un mouvement de rotation, par exemple un demi-tour, à l'organe 104 dans le sens indiqué par la flèche f1, on provoque l'ouverture du rideau 49 dans le sens indiqué par la flèche f2. Le rôle des roues 101 et 102 est de fournir une démultiplication pour qu'une rotation d'un demi-tour du disque 103 provoque le déplacement du rideau 49 sur la longueur voulue.

A l'opposé du train de dents 100 dans la hauteur du rebord 59, celui-ci comprend des moyens 113 pour coopérer avec une roue dentée 105 liée en rotation à la paroi frontale 41 de la cassette pour transmettre le mouvement au rideau 48 qui comporte également des moyens 113 d'engrenage avec la roue 105. On notera que les deux rideaux sont déplacés simultanément dans des sens contraires.

Comme il ressort de la figure 5, le rideau 49 comporte un tronçon plus épais 55 destiné à masquer l'ouverture 52 en défilant devant la paroi frontale 41 et un tronçon plus fin 56 destiné à suivre la déformation imposée par la paroi circulaire 51 de faible rayon.

Le verrouillage du couvercle 60 est effectué, par exemple, au moyen d'une transmission par câble de la rotation de l'organe 104 à une pastille 106 de verrouillage du couvercle, montée à rotation autour d'un axe 107. La pastille 106 comporte une lumière circulaire 108 communiquant avec une ouverture périphérique 109. L'ouverture 109 est destinée à recevoir un bec (non représenté) faisant saillie de la face interne du couvercle 60. Le bec est destiné à s'engager dans l'ouverture 109 et à être bloqué dans la lumière 108 une fois que la pastille 106 a été tournée autour de l'axe 107. Ce moyen de verrouillage constitue un moyen de blocage classique en mécanique.

Une première extrémité du câble 110 est fixée à la pastille 106. Le câble est guidé dans une gaine 111 dont les extrémités respectives sont reçues dans des éléments de blocage 112. L'autre extrémité du câble 110 est fixée à l'axe de rotation du disque 103. L'amplitude de la rotation imprimée à la pastille 106 dépend du diamètre externe de l'axe de rotation sur lequel est enroulé le câble, côté organe d'actionnement 104.

De préférence, la platine 21 et le couvercle 60 comportent, dans des plans décalés par rapport aux parois 23 et 62, des saillies, respectivement 64 et 63 (figure 1), de forme générale triangulaire et destinées à coopérer avec des rainures de forme contraire 57 des extrémités avant de la cassette. On garantit ainsi un positionnement correct de la cassette et on compense d'éventuelles tolérances de fabrication de la cassette.

La figure 6 illustre le positionnement des noyaux 90 sur l'axe principal 22 lorsque la cassette 40 est en position d'utilisation sur le dispositif 20. Autour de l'orifice 47, le fond 46 présente, de préférence, une nervure externe 58 destinée à coopérer avec un épaulement 67 concentrique à l'axe principal 22 pour participer au positionnement correct du boîtier de la cassette 40. Avec le blocage assuré par les rainures 57, on garantit ainsi que le boîtier de la cassette 40 ne bouge pas lorsque celle-ci est en position d'utilisation et, ainsi, que ni le film, ni les bobines, ne touchent les parois de la cassette 40 pendant le défilement du film.

Le rouleau 90 destiné à coopérer avec la portion 32 de l'axe 22 repose sur un épaulement 65 de la portion 32 afin de garantir un écart axial entre le rouleau 90 et le fond 46. De préférence, le noyau 90 comporte un épaulement périphérique 97 destiné à coopérer avec une nervure circulaire 66, ménagée en saillie de la face interne du fond 46 autour de l'orifice 47, pour constituer une chicane au passage de la lumière lorsque la cassette 40 est en position de stockage hors de la caméra.

Si l'axe 22 est moteur, les rouleaux 90 sont liés en rotation aux portions respectives 32 et 31, par exemple, au moyen d'un ergot (non représenté) saillant des portions 32 et 31, coopérant avec des dents 98 (figure 3) ménagées sur la périphérie interne des noyaux 90.

Un avantage de la présente invention est que les disques 94 d'écartement des joues 91 participent au positionnement axial des bobines lorsqu'elles sont en position d'utilisation. En effet, la caméra est généralement utilisée alors que les bobines sont sensiblement verticales en étant, par exemple, portée par l'épaule d'un utilisateur. Le poids des bobines induit alors essentiellement une force radiale sur l'axe 22 et la rigidité des joues 91 associées au disque 94 suffit alors à éviter un déplacement axial des bobines. On peut également prévoir des moyens de blocage, par exemple magnétiques, des noyaux 90 sur l'axe 22.

Un autre avantage de la présente invention est qu'elle permet d'utiliser des cassettes à usage unique dans une caméra pour films cinématographiques, sans générer de bruit acoustique. En effet, tous les éléments devant être réalisés avec une précision d'ajustement élevée et qui ne sont pas associés au bloc optique 10 sont alors associés au dispositif 20. La cassette 40 contient uniquement les bobines de film et les noyaux sur lesquels ces bobines sont enroulées. Tous les éléments coûteux d'un magasin classique ont donc été, selon l'invention, reportés dans le dispositif de réception 20.

Un autre avantage de l'invention est qu'elle respecte les liaisons classiques avec le bloc optique 10. Ainsi, le dispositif 20 peut constituer, selon l'invention, un adaptateur, ou une interface, permettant d'associer une cassette réalisée de manière standardisée avec différents blocs optiques. En d'autres termes, les axes principal 22 et secondaires 29 et 30 d'un dispositif 20 selon l'invention sont réalisés et positionnés en fonction de la cassette 40 à laquelle le dispositif 20 est destiné. Par contre, les galets 15, 16, 24 et 25, le presseur arrière 12 ainsi que les moyens d'entraînement de l'axe 22 sont réalisés et positionnés, en fonction du bloc optique 10 et des moyens de motorisation 11 qu'il comporte.

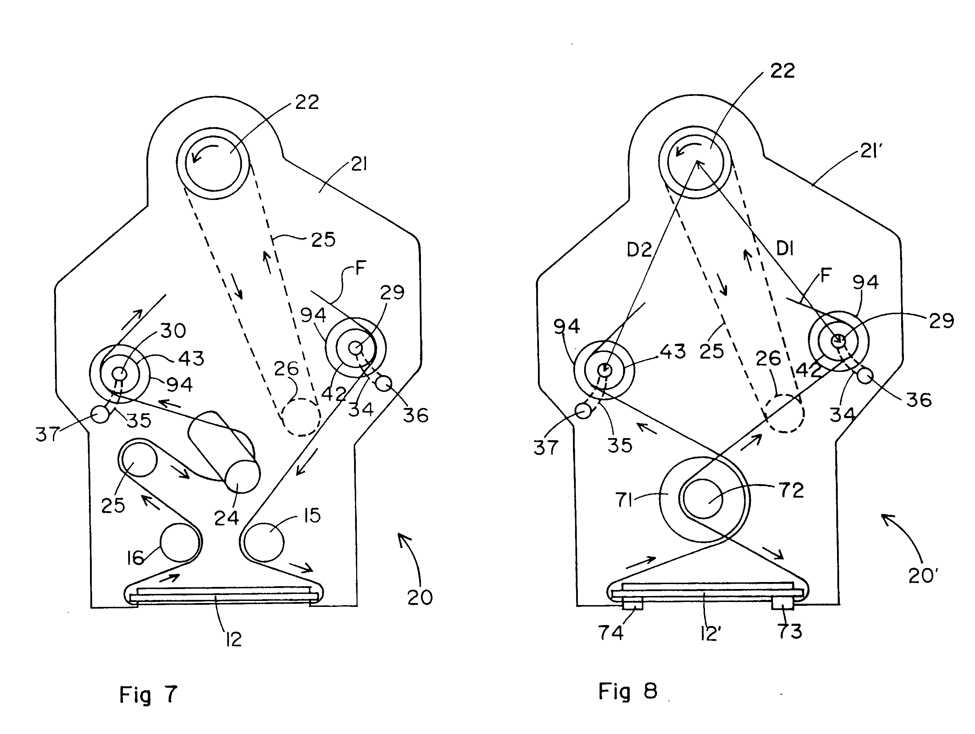

Les figures 7 et 8 illustrent cette fonction d'adaptation d'un dispositif de réception selon l'invention. La figure 7 est une vue en élévation d'une platine 21 selon un premier mode de réalisation d'un dispositif de réception 20. La figure 8 est une vue en élévation d'une platine 21' selon un second mode de réalisation d'un dispositif de réception 20'.

Le mode de réalisation représenté à la figure 7 est destiné à remplacer un premier type classique de magasin, dans lequel le redressement de la boucle du film F est effectuée au moyen d'une poulie de changement de pied 24. On notera que la figure 7 constitue une variante par rapport à la platine représentée à la figure 1. En effet, à la figure 1, le défilement du film devant la fenêtre de prise de vues s'effectue dans l'alignement de la bobine proximale de la platine 21, la poulie de changement de pied 24 étant associée au rouleau 42 de sortie du film. Par contre, à la figure 7, la poulie de changement de pied 24 est associée au rouleau 43 d'entrée du film et le défilement devant la fenêtre de prise de vues s'effectue dans l'alignement de la bobine distale de la platine 21, c'est-à-dire en partie haute.

A la figure 7, le film F sort de la cassette (non représentée) par une ouverture 52 distale de la platine 21. Le film est renvoyé par le rouleau 42. Il est guidé vers le presseur arrière 12 au moyen du galet 15 et guidé, au moyen du galet 16, vers le galet 25. Le galet 25 renvoie le film vers la poulie de changement de pied 24 pour être remis dans l'alignement du rouleau 43 avant de rentrer dans la cassette.

Le mode de réalisation représenté à la figure 8 est destiné à remplacer un second type classique de magasin dans lequel le redressement du film F est assuré par le presseur arrière 12' lui-même. Le film F est guidé par deux poulies coaxiales 71 et 72 et le presseur arrière 12' comporte des butées latérales 73 et 74, opposées et classiques, permettant de redresser le film F. Les poulies 71 et 72 ont été représentées avec des diamètres différents pour mieux faire apparaître le trajet du film F mais elles peuvent être de même diamètre.

Aux figures 7 et 8, les moyens d'entraînement de l'axe 22 ont été illustrés de façon schématique. Il s'agit, par exemple, d'une courroie 25 logée dans l'épaisseur de la platine 21 et entraînée par un arbre 26 coopérant, par exemple de façon magnétique, avec le moyen de motorisation 11 du bloc optique 10.

Comme il ressort des figures 7 et 8, on notera que l'alignement des axes secondaires 29 et 30 n'est pas nécessairement parallèle avec le presseur arrière 12. Ces axes peuvent en effet être décalés par rapport à une parallèle au presseur arrière 12 en fonction, par exemple, de la position des organes de commande de la caméra. On veillera cependant à ce que la distance (D1, figure 8) qui sépare l'axe 29 de l'axe 22 soit identique à la distance (D2, figure 8) qui sépare l'axe 30 de l'axe 22 lorsque ces axes sont en position active.

D'autres modes de réalisation du dispositif de réception peuvent être prévus. Un avantage de la présente invention est que la constitution du dispositif de réception peut être adaptée à différents types de caméra tout en permettant l'emploi de cassettes standardisées.

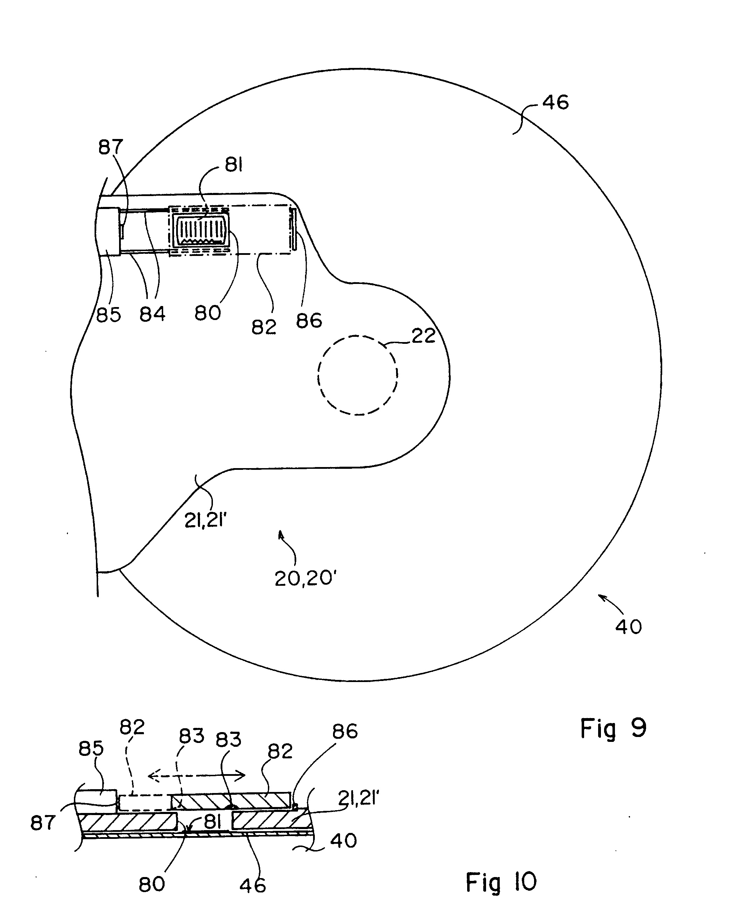

Les figures 9 et 10 illustrent une autre caractéristique de la présente invention qui permet d'équiper la caméra de moyens d'identification de la cassette 40 et de caractéristiques du film qu'elle contient. La figure 9 représente, partiellement et en vue de dessous, un dispositif de réception 20, ou 20', sur lequel est montée une cassette 40. La figure 10 représente, en coupe, un détail de la figure 9.

La platine 21 (ou 21') comporte, dans une zone en regard du fond 46 de la cassette 40, une lumière 80. Cette lumière est destinée à permettre la lecture, par exemple optique, d'une étiquette 81 apposée, par exemple lors de la fabrication de la cassette 40, sur son fond 46. La lumière 80 est, de préférence, ménagée hors de la zone étanche au passage de la lumière définie par les moyens d'étanchéité entre la platine 21 (ou 21') et le fond 46. L'étiquette 81 comporte, par exemple, des informations codées sous forme de barres. La lecture de l'étiquette est effectuée au moyen d'un dispositif de lecture optique associé au dispositif 20 (ou 20'). Ce dispositif est, par exemple, constitué d'une barrette 82 pourvue d'une diode de lecture 83. Pour des raisons de clarté, la barrette 82 a été représentée par un trait mixte à la figure 9. La barrette 82 est montée, par exemple sur des rails 84 saillants de la platine 21 (ou 21'), de façon à pouvoir se déplacer selon la direction longitudinale de la lumière 80 entre deux butées, respectivement 85 et 86, afin de permettre un déplacement de la diode 83 le long de l'étiquette 81.

Selon l'invention, la barrette 82 est associée à des moyens de rappel élastique (non représentés) vers une position de repos où elle est distale d'une première butée 85 pourvue de moyens électroniques (non représentés) d'interprétation des informations lues par la diode 83. Ces moyens de rappel permettent d'assurer, de manière simple, un défilement de la diode 83 devant l'étiquette 81, à une vitesse sensiblement régulière.

La butée 85 comporte un ou plusieurs contacts 87, propres à coopérer avec des contacts (non représentés) de la barrette 82, pour initialiser les moyens d'interprétation lorsque la barrette 82 est amenée, manuellement, dans une position d'activation où elle touche la butée 85. Les positions de repos et d'activation de la barrette 82 sont représentées à la figure 10, respectivement, en traits pleins et en pointillés.

Lorsque l'utilisateur fait glisser la barrette 82 vers sa position d'activation (flèche en pointillés à la figure 10), il arme les moyens de rappel en même temps qu'il initialise les moyens d'interprétation. Lorsqu'il lâche la barrette 82, les moyens de rappel provoquent un déplacement de la barrette 82 vers la butée 86 (flèche en traits pleins à la figure 10) à une vitesse sensiblement régulière et l'étiquette 81 est lue.

Les signaux électriques de la diode 83 transitent, depuis la barrette 82 jusqu'à la butée 85, par exemple au moyen des rails 84 qui peuvent être conducteurs. Dans ce cas, un capot (non représenté) recouvre, de préférence, le dispositif de lecture depuis la butée 85 jusqu'à l'aplomb de l'extrémité de la lumière 80, distale de cette butée 85. Les rails 84 s'étendent depuis la butée 85 jusqu'à cette extrémité distale. Ainsi, les rails 84 sont protégés, quelle que soit la position de la barrette 82, tout en permettant un actionnement de la barrette par l'utilisateur.

Le transfert des signaux nécessaires à l'exploitation des informations lues est effectué au moyen de contacts électriques entre le dispositif de réception 20 (ou 20') et le bloc optique 10. Le cas échéant, les moyens d'interprétation sont reportés dans le bloc optique de la caméra qui est alors relié électriquement et de manière appropriée à la butée 85.

Le dispositif de lecture optique peut également être reporté sur le capot 60 du dispositif de réception 20 (ou 20'). Dans ce cas, le capot 60 comporte des contacts électriques de connexion avec le bloc optique 10 pour assurer le transfert des différents signaux nécessaires.

Un avantage d'équiper le dispositif de réception de tels moyens de lecture est que cela permet de conférer à la caméra la possibilité d'identifier la cassette et les caractéristiques du film qu'elle contient. Un autre avantage, induit par l'utilisation d'une cassette, est qu'il n'est désormais plus nécessaire que l'utilisateur introduise ces caractéristiques. En effet, dans le cas d'un magasin classique, le magasin est réutilisable. L'utilisateur doit donc introduire, dans le magasin, les caractéristiques relatives au film qu'il contient. Par contre, la cassette étant à usage unique, l'étiquette 81 peut comporter, de manière codée, toutes les caractéristiques du film (longueur, sensibilité, etc.), ainsi qu'un identificateur de la cassette elle-même. Les codes-barres peuvent, en effet, contenir un grand nombre d'informations. L'étiquette 81 est, selon l'invention, apposée lors de la fabrication de la cassette.

Le bloc optique comporte des moyens de mémorisation et d'exploitation des informations contenues dans l'étiquette 81. Ces moyens sont similaires à ceux utilisés, dans les caméras classiques, pour mémoriser et exploiter les informations introduites par l'utilisateur dans le dispositif de caractérisation du magasin.

La réalisation pratique du dispositif de lecture optique est à la portée de l'homme du métier en fonction des indications fonctionnelles données ci-dessus. On notera que le dispositif de lecture optique peut être remplacé par un système de lecture de puce électronique associée à la cassette.

Bien entendu, la présente invention est susceptible de diverses variantes et modifications qui apparaîtront à l'homme de l'art. En particulier, les dimensions du dispositif de réception 20 (ou 20') dépendent du bloc optique 10 et de la cassette 40 à laquelle il est destiné, donc de la largeur du film F et de sa longueur maximale. En outre, bien que l'invention ait été décrite en relation avec une caméra dans laquelle les bobines réceptrices et débitrices sont coaxiales, elle s'applique également au cas où ces bobines sont portées individuellement par deux axes principaux indépendants, par exemple, positionnant les bobines de façon coplanaire. Les modifications à apporter à la disposition des moyens décrits ci-dessus sont à la portée de l'homme de l'art.

## Revendications

1. Dispositif (20 ; 20') de réception de bobines de film cinématographique (F), destiné à être associé à un bloc optique (10) d'une caméra de prise de vues, comportant :
une platine (21 ; 21') de réception des bobines et de définition d'un espace pour des moyens (15, 16, 24, 25 ; 71, 72) de guidage du film (F) en boucle entre les bobines et un presseur arrière (12 ; 12') destiné à être en regard d'une fenêtre (13) de prise de vues du bloc optique (10), chaque bobine comportant deux joues (91) circulaires de maintien axial du film autour d'un noyau (90) ;
un moyen (31, 32) de rotation d'au moins un des noyaux (90) autour d'au moins un axe principal (22) ;
des moyens (29, 30) constituant deux axes secondaires respectifs de rotation d'un rouleau de renvoi (42, 43) du film (F) et de moyens (94) d'écartement des joues (91) d'une bobine,
**caractérisé en ce qu'**il comporte des moyens (34, 35, 36, 37) pour définir un mouvement relatif entre les axes secondaires (29, 30) et les bobines, entre une position de repos où les axes secondaires (29, 30) sont distants radialement des bobines et où les moyens d'écartement ne sont pas en contact avec les joues, et une position active où les axes secondaires sont dans une position telle que les moyens d'écartement écartent la périphérie des joues (91) dans une région déterminée, fixe par rapport au dispositif de réception (20 ; 20').

2. Dispositif de réception selon la revendication 1, **caractérisé en ce que** chaque axe secondaire (29, 30) porte à rotation un rouleau de renvoi (42, 43), encadré axialement par deux disques (94) constituant les moyens d'écartement, également montés à rotation sur l'axe secondaire (29, 30) indépendamment du rouleau de renvoi (42, 43).

3. Dispositif de réception selon la revendication 2, **caractérisé en ce que** le diamètre des disques (94) est supérieur au diamètre du rouleau (42, 43) auquel ils sont associés.

4. Dispositif de réception selon la revendication 2 ou 3, **caractérisé en ce que** chaque disque (94) est propre à coopérer avec un bord biseauté (93) que comporte chaque joue (91), en périphérie, et qui est destiné à constituer une surface d'appui pour le disque (94), les bords biseautés (93) des deux joues (91) d'une même bobine se faisant face.

5. Dispositif de réception selon l'une quelconque des revendications 2 à 4, **caractérisé en ce qu'**au moins un disque (94) d'une bobine est motorisé.

6. Dispositif de réception selon la revendication 5, **caractérisé en ce qu'**au moins un rouleau de renvoi (42, 43) est motorisé et comporte des moyens de traction du film.

7. Dispositif de réception selon l'une quelconque des revendications 2 à 4, **caractérisé en ce que** l'axe principal (22) est motorisé, les rouleaux de renvoi (42, 43) et les disques (94) étant libres en rotation indépendamment les uns des autres sur les axes secondaires (29, 30).

8. Dispositif de réception selon l'une quelconque des revendications 2 à 7, **caractérisé en ce que** lesdites bobines sont contenues dans une cassette (40) pourvue de rideaux (48, 49) mobiles entre une position fermée où ils définissent des fentes (44, 45) de communication entre l'extérieur et l'intérieur de la cassette (40) et une position ouverte où ils définissent des ouvertures (52) d'introduction au moins partielle des disques (94) d'écartement des joues (91).

9. Dispositif de réception selon la revendication 8, **caractérisé en ce qu'**il comporte des moyens d'actionnement (104), accessibles depuis l'extérieur, pour commander l'ouverture simultanée et la fermeture simultanée des rideaux (48, 49) de la cassette (40).

10. Dispositif de réception selon la revendication 9, **caractérisé en ce que** les moyens d'actionnement (104) verrouillent simultanément un couvercle (60) de fermeture de l'espace destiné aux moyens de guidage (15, 16, 24, 25 ; 71, 72).

11. Dispositif de réception selon l'une quelconque des revendications 1 à 10, **caractérisé en ce qu'**il comporte des moyens (97), accessibles depuis l'extérieur, de commande de déplacement radial des axes secondaires (29, 30) ou de l'axe principal (22) entre les positions de repos et active.

12. Dispositif de réception selon la revendication 8 et l'une quelconque des autres revendications précédentes, **caractérisé en ce qu'**il est amovible par rapport au bloc optique (10), les moyens de guidage étant constitués de galets (15, 16, 24, 25 ; 71, 72) supportés, au moins pour certains (24, 25 ; 71, 72) d'entre eux, par la platine (21 ; 21'), et **en ce que** la réalisation et le positionnement desdits galets supportés par la platine (21 ; 21') est fonction du bloc optique (10) auquel est destiné le dispositif de réception (20 ; 20') tandis que la position des axes principal (22) et secondaires (29, 30) est fonction de la cassette (40) à laquelle est destiné le dispositif de réception (20 ; 20').

13. Dispositif de réception selon l'une quelconque des revendications 1 à 12, **caractérisé en ce que** les deux bobines sont coaxiales et portées par un seul axe principal (22).

14. Dispositif de réception selon la revendication 8 et l'une quelconque des autres revendications précédentes, **caractérisé en ce qu'**il comporte un dispositif de lecture optique (82, 83) d'une étiquette (81) contenant des caractéristiques du film (F) contenu dans la cassette (40) et apposée sur une face externe de celle-ci, la platine (21 ; 21') comportant une lumière (80) propre à être en regard de l'étiquette (81), et une barrette (82) de lecture optique associée au dispositif de réception (20 ; 20') étant propre à défiler devant cette lumière (80).

15. Caméra de prise de vues pour film cinématographique (F) comportant un bloc optique (10) associé à des moyens de motorisation (11) d'un mécanisme d'entraînement (22, 25, 26) du film, des moyens (20 ; 20') de réception d'une cassette amovible (40) contenant le film (F) sous la forme d'une première bobine de pellicule vierge et d'une deuxième bobine de film exposé, les bobines étant coaxiales et lesdits moyens de réception (20 ; 20') comportant des moyens (22, 29, 30) propres à coopérer avec des éléments mobiles (90, 91) contenus dans la cassette (40) pour que en position d'utilisation, ni le film (F), ni un élément mobile (90, 91) avec lequel le film (F) est en contact soit en contact avec un élément fixe de la cassette (40), lesdits moyens de réception étant constitués d'un dispositif de réception (20 ; 20') selon l'une quelconque des revendications 1 à 14.

## Patentansprüche

1. Vorrichtung (20; 20') zur Aufnahme von Spulen eines kinematographischen Films (F), die mit einem optischen Block (10) einer Aufnahmekamera verbindbar ist, mit
einer Aufnahmeplatine (21; 21') zur Aufnahme der Spulen und zur Festlegung eines Raums für Einrichtungen (15, 16, 24, 25; 71, 72) zum Führen des Films (F) in einer Schleife zwischen den Spulen und einem hinteren Druckelement (12; 12'), das einem Aufnahmefenster (13) des optischen Blocks (10) gegenüberliegt, wobei jede Spule zwei kreisförmige Flansche (91) aufweist, die den um einen Kern (90) gewickelten Film axial halten;
einer Einrichtung (31, 32) für die Drehung zumindest eines der Kerne (90) um zumindest eine Hauptachse (22);
Einrichtungen (29, 30), die zwei Sekundärdrehachsen einer Umkehrrolle (42, 43) des Films (F) bilden, und
Einrichtungen (94) zum Halten der Flansche (91) einer Spule auf Abstand,
**dadurch gekennzeichnet, daß** sie Einrichtungen (34, 35, 36, 37) aufweist; um eine Relativbewegung zwischen den Sekundärachsen (29, 30) und den Spulen zu bestimmen zwischen einer Ruheposition, in der. die Sekundärachsen (29, 30) radial von den Spulen entfernt sind und in der die Abstandshalteeinrichtungen nicht in Kontakt mit den Flanschen sind, und einer aktiven Position, in der die Sekundärachsen in einer Position sind, in der die Abstandshalteeinrichtungen die Peripherie der Flansche (91) in einem bestimmten Bereich auf Abstand halten, der in Bezug zu der Aufnahmevorrichtung (20; 20') fest ist.

2. Aufnahmevorrichtung nach Anspruch 1, **dadurch gekennzeichnet, daß** jede Sekundärachse (29, 30) drehbar eine Umkehrrolle (42, 43) trägt, die axial von zwei Scheiben (94), die die Abstandshalteeinrichtungen bilden, umgeben ist und die ebenfalls drehbar auf der Sekundärachse (29, 30) unabhängig von der Umkehrrolle (42, 43) montiert sind.

3. Aufnahmevorrichtung nach Anspruch 2, **dadurch gekennzeichnet, daß** der Durchmesser der Scheiben (94) größer als der Durchmesser der Rolle (42, 43) ist, der sie jeweils zugeordnet sind.

4. Aufnahmevorrichtung nach Anspruch 2 oder 3, **dadurch gekennzeichnet, daß** jede Scheibe (94) mit einem abgeschrägten Rand (93), den jeder Flansch (91) an seinem Umfang aufweist, zusammenarbeitet und der eine Anlagefläche für die Scheibe (94) bildet, wobei die abgeschrägten Ränder (93) der beiden Flansche (91) einer Spule sich gegenüberliegen.

5. Aufnahmevorrichtung nach einem der Ansprüche 2 bis 4, **dadurch gekennzeichnet, daß** zumindest eine Scheibe (94) einer Spule angetrieben ist.

6. Aufnahmevorrichtung nach Anspruch 5, **dadurch gekennzeichnet, daß** zumindest eine Umkehrrolle (42, 43) angetrieben ist und Antriebseinrichtungen für den Film aufweist.

7. Aufnahmevorrichtung nach einem der Ansprüche 2 bis 4, **dadurch gekennzeichnet, daß** die Hauptachse (22) angetrieben ist, wobei die Umkehrrollen (42, 43) und die Scheiben (94) unabhängig voneinander auf den Sekundärachsen (29, 30) frei drehbar sind.

8. Aufnahmevorrichtung nach einem der Ansprüche 2 bis 7, **dadurch gekennzeichnet, daß** die Spulen in einer Kassette (40) gehalten sind, die mit Vorhängen (48, 49) versehen ist, die zwischen einer geschlossenen Position, in der sie Schlitze (44, 45) zur Kommunikation zwischen dem Äußeren und dem Inneren der Kassette (40) bilden und einer offenen Position beweglich sind, in der sie Öffnungen (52) zum zumindest partiellen Einführen der Abstandsscheiben (94) der Flansche (91) bilden.

9. Aufnahmevorrichtung nach Anspruch 8, **dadurch gekennzeichnet, daß** sie Betätigungseinrichtungen (104) aufweisen, die von außen zugänglich sind, um das gleichzeitige Öffnen und Schließen der Vorhänge (48, 49) der Kassette (40) zu steuern.

10. Aufnahmevorrichtung nach Anspruch 9, **dadurch gekennzeichnet, daß** die Betätigungseinrichtungen (104) gleichzeitig einen Deckel (60) zum Verschließen des den Führungseinrichtungen (15, 16, 24, 25; 71, 72) zugeordneten Raums verriegeln.

11. Aufnahmevorrichtung nach einem der Ansprüche 1 bis 10, **dadurch gekennzeichnet, daß** sie von außen zugängliche Einrichtungen (97) zum Steuern der radialen Verschiebung der Sekundärachsen (29, 30) oder der Hauptachse (22) zwischen der Ruheposition und der aktiven Position aufweist.

12. Aufnahmevorrichtung nach Anspruch 8 und einem der anderen vorhergehenden Ansprüche, **dadurch gekennzeichnet, daß** sie von dem optischen Block (10) abnehmbar ist, wobei die Führungseinrichtungen durch Walzen (15, 16, 24, 25; 71, 72) gebildet sind, von denen zumindest einige (24, 25; 71, 72) von der Platine (21; 21') gehalten sind, und daß die Ausbildung und die Positionierung der durch die Platine (21; 21') gehaltenen Walzen eine Funktion des optischen Blocks (10) sind, dem die Aufnahmevorrichtung (20; 20') zugeordnet ist, wohingegen die Position der Hauptachse (22) und der Sekundärachsen (29, 30) eine Funktion der Kassette (40) ist, der die Aufnahmevorrichtung (20; 20') zugeordnet ist.

13. Aufnahmevorrichtung nach einem der Ansprüche 1 bis 12, **dadurch gekennzeichnet, daß** die beiden Spulen koaxial und von einer einzigen Hauptachse (22) getragen sind.

14. Aufnahmevorrichtung nach Anspruch 8 und einem der anderen vorhergehenden Ansprüche, **dadurch gekennzeichnet, daß** sie eine optische Leseeinrichtung (82, 83) für ein Etikett (81) aufweist, das charakteristische Eigenschaften des in der Kassette (40) enthaltenen Films (F) enthält und auf einer äußeren Fläche der Kassette angebracht ist, wobei die Platine (21; 21') ein dem Etikett (81) gegenüberliegendes Fenster (80) und einen optischen Lesebalken (82) aufweist, der der Aufnahmevorrichtung (20; 20') zugeordnet ist und vor dem Fenster (80) vorbeibewegbar ist.

15. Aufnahmekamera für einen kinematographischen Film (F) mit einem optischen Block (10), der einer Motoreinrichtung (11) eines Antriebsmechanismuses (22; 25, 26) für den Film zugeordnet ist, mit einer Aufnahmevorrichtung (20; 20') für eine auswechselbare Kassette (40), die den Film (F) auf einer ersten Spule für den unbelichteten Film und auf einer zweiten Spule für den belichteten Film aufnimmt, wobei die Spulen koaxial sind und die Aufnahmevorrichtung (20; 20') Einrichtungen (22, 29, 30) aufweist, die mit beweglichen Elementen (90, 91) zusammenarbeitet, die in der Kassette (40) enthalten sind, damit in einer Betriebsposition weder der Film (F) noch ein bewegliches Element (90, 91) mit dem der Film (F) in Kontakt ist, in Kontakt mit einem festen Element der Kassette (40) ist, wobei die Aufnahmevorrichtung durch eine Aufnahmevorrichtung (20; 20') nach einem der Ansprüche 1 bis 14 ausgebildet ist.

## Claims

1. A device (20; 20') for housing motion picture film reels (F), intended to be associated with an optical block (10) of a film camera, including:
a stage (21; 21') for housing the reels and defining a space for means (15, 16, 24, 25; 71, 72) for guiding the film (F) in a loop between the reels and a rear presser (12; 12') intended to face a filming window (13) of the optical block (10), each reel including two circular flanges (91) for axially holding the film around a core (90);
means (31, 32) for the rotation of at least one core (90) around at least one main axis (22),
means (29, 30) forming two respective secondary axes for the rotation of a return idler (42, 43) of the film (F) and means (94) of separating the flanges (91) of a reel,
**characterized in that** it comprises means (34, 35, 36, 37) for defining a relative motion between the secondary axes (29, 30) and the reels, between an idle position where the secondary axes (29, 30) are radially distant from the reels and where the separating means are not in contact with the flanges, and an active position where the secondary axes are in such a position that the separating means separate the periphery of the flanges (91) in a determined region, fixed with respect to the housing device (20, 20').

2. The housing device of claim 1, **characterized in that** each secondary axis (29, 30) pivotally supports a return idler (42, 43), axially placed between two disks (94) forming the separating means, also pivotally mounted on the secondary axis (29, 30), independently from the return idler (42, 43).

3. The housing device of claim 2, **characterized in that** the diameter of the disks (94) is greater than the diameter of the idler (42, 43) to which they are associated.

4. The housing device of claim 2 or 3, **characterized in that** each disk (94) is adapted for cooperating with a tapered edge (93) that is formed on each flange (91) at its periphery, and that is adapted to forming a bearing surface for the disk (94), the tapered edges (93) of the two flanges (91) of a same reel facing each other.

5. The housing device of any of claims 2 to 4, **characterized in that** at least one disk (94) of a reel is motor driven.

6. The housing device of claim 5, **characterized in that** at least one return idler (42, 43) is motor driven and includes film traction means.

7. The housing device of any of claims 2 to 4, **characterized in that** the main axis (22) is motor driven, the return idler (42, 43) and the disks (94) rotating freely independently from one another on the secondary axes (29, 30).

8. The housing device of any of claims 2 to 7, **characterized in that** the reels are contained in a cartridge (40) provided with curtains (48, 49) movable between a closed position where they define slots (44, 45) of communication between the outside and the inside of the cartridge (40) and an open position where they define openings (52) for introducing at least partially the separating disks (94) of the flanges (91).

9. The housing device of claim 8, **characterized in that** it includes operating means (104), accessible from the outside, for controlling the simultaneous opening and the simultaneous closing of the curtains (48, 49) of the cartridge (40).

10. The housing device of claim 9, **characterized in that** the operating means (104) simultaneously lock a closing cover (60) of the space housing the guiding means (15, 16, 24, 25; 71, 72).

11. The housing device of any of claims 1 to 10, **characterized in that** it includes means (97), accessible from the outside, for controlling radial motions of the secondary axes (29, 30) or of the main axis (22) between the idle and active positions.

12. The housing device of claim 8 and of any of the other above claims, **characterized in that** it is removable from the optical block (10), the guiding means being formed of rollers (15, 16, 24, 25; 71, 72) supported, at least some of them (24, 25; 71, 72), by the stage (21; 21'), and **in that** the realization and the positioning of said rollers supported by the stage (21; 21') depends on the optical block (10) for which the housing device (20; 20') is intended while the position of the main (22) and secondary (29, 30) axes depends on the cartridge (40) for which the housing device (20; 20') is intended.

13. The housing device of any of claims 1 to 12, **characterized in that** the two reels are coaxial and supported by a single main axis (22).

14. The housing device of claim 8 and of any of the other above claims, **characterized in that** it includes a device (82, 83) for optically reading a label (81) showing characteristics of the film (F) contained in the cartridge (40) and affixed on an external surface thereof, the stage (21; 21') including a port (80) arranged to face the label (81), and an optical reading rod (82) associated with the housing device (20; 20') being adapted to travel in front of this port (80).

15. A film camera for a motion picture film (F) including an optical block (10) associated with motor drive means (11) for a film drive mechanism (22, 25, 26), housing means (20; 20') for a removable cartridge (40) containing the film (F) in the form of a first raw film reel and of a second exposed film reel, the reels being coaxial and the housing means (20; 20') including means (22, 29, 30) arranged to cooperate with movable elements (90, 91) contained in the cartridge (40) so that, in a work position, neither the film (F), nor a movable element (90, 91) with which the film (F) is in contact, is in contact with a fixed element of the cartridge (40), said housing means being formed by the housing device (20; 20') of any of claims 1 to 14.
